Europäisches Patentamt

European Patent Office

Office européen des brevets

(11) Numéro de publication: **0 078 204**
**B1**

## FASCICULE DE BREVET EUROPÉEN

(45) Date de publication du fascicule du brevet:
04.02.87

(51) Int. Cl.⁴: **B 60 R 22/40**

(21) Numéro de dépôt: **82401930.1**

(22) Date de dépôt: **20.10.82**

(54) Enrouleur à blocage automatique pour ceintures de sécurité.

(30) Priorité: **28.10.81 FR 8120231**

(43) Date de publication de la demande:
**04.05.83 Bulletin 83/18**

(45) Mention de la délivrance du brevet:
**04.02.87 Bulletin 87/6**

(84) Etats contractants désignés:
**DE GB IT SE**

(56) Documents cité:
**FR-A-2 173 585**
**FR-A-2 398 512**
**FR-A-2 405 717**
**GB-A-1 357 369**

(73) Titulaire: **AUTOLIV DEVELOPMENT AKTIEBOLAG,
P.O. Box 124, S-447 00 Vargarda (SE)**

(72) Inventeur: **Gueguen, Daniel, 29 Avenue Molière,
F-78360 Montesson (FR)**
Inventeur: **Rothera, Jacques, 32 Avenue de
Brétigny, F-91240 St. Michel s/Orge (FR)**

(74) Mandataire: **Hirsch, Marc- Roger, Cabinet Hirsch
34 rue de Bassano, F-75008 Paris (FR)**

## Description

La présente invention concerne un enrouleur à blocage automatique pour au moins une ceinture de sécurité de véhicule comportant un mandrin monté à rotation dans un support et sur lequel est enroulée la sangle de la ceinture, l'axe du mandrin pouvant être horizontal ou incliné d'un certain angle, ledit mandrin étant sollicité par un ressort de torsion dans le sens de l'enroulement, et un dispositif de verrouillage qui, en cas de choc, bloque le mandrin en rotation en empêchant le déroulement de la sangle, le dispositif de verrouillage comportant une roue d'inertie rappelée par un organe élastique et étant commandé par un détecteur d'accélération, comprenant une masse d'inertie coopérant lors de la détection d'une accélération ou d'une décélération avec un levier oscillant de blocage de la roue d'inertie et susceptible d'être ramené sensiblement dans la même position quelle que soit l'inclinaison de l'axe du mandrin de l'enrouleur à l'aide d'un premier boîtier fixé par une de ses faces latérales contre une face du support de l'enrouleur et dont une autre face latérale comporte un orifice pour la fixation d'un second boîtier qui porte la masse d'inertie et qui présente une saillie engagée dans l'orifice du premier boîtier et susceptible d'être immobilisée selon différentes positions angulaires dans ledit orifice de façon à permettre le réglage du second boîtier dans une position horizontale quelle que soit l'inclinaison de l'axe du mandrin. Un enrouler de ce type est décrit dans FR-A-2 398 512.

Les ceintures de sécurité équipées de tels enrouleurs sont destinées notamment aux véhicules automobiles terrestres, marins, aériens ou spatiaux.

On connaît des enrouleurs à blocage automatique pour ceintures de sécurité comportant un axe sur lequel la sangle de la ceinture est enroulée et qui est sollicité par un ressort de torsion dans le sens de l'enroulement, et un dispositif de verrouillage qui, en cas de choc, bloque l'axe en rotation en empêchant le déroulement de la sangle.

Le dispositif de verrouillage comporte généralement un détecteur d'accélération qui commande le dispositif de verrouillage par l'intermédiaire d'un organe formant cliquet lorsque les accélérations du véhicule dépassent une valeur prédéterminée.

Le détecteur d'accélération comporte une masse d'inertie mobile sensible aux accélérations du véhicule pour agir sur ledit organe formant cliquet.

Dans certains enrouleurs, cette masse d'inertie est constituée par un pendule suspendu à un support solidaire du corps de l'enrouleur.

Dans d'autres enrouleurs, la masse d'inertie est constituée par une bille placée dans une cuvette.

Quelle que soit la nature de la masse utilisée, son support doit être horizontal en l'absence d'une accélération du véhicule.

Or, les constructeurs de véhicules automobiles doivent souvent placer les enrouleurs à des emplacements dans lesquels les enrouleurs sont inclinés avec des angles d'inclinaison qui diffèrent d'un type de véhicule à l'autre.

Pour que le support de la masse mobile soit horizontal, on doit donc adapter l'inclinaison de la face du support qui doit être en contact avec le corps de l'enrouleur, à l'angle d'inclinaison dudit corps.

Parmi les documents de l'art antérieur visant à résoudre ce problème, FR-A-2 398 512 décrit un rétracteur pour sangle de sécurité, qui vise quel que soit l'angle d'inclinaison d'un mandrin, à ramener dans une position verticale un pendule qu'il lorsqu'il s'en écarte, soulève un cliquet dont la pointe active bloque alors une roue dentée constituant un volant d'inertie. La pointe du cliquet présente une forme arrondie concave adaptée à la forme arrondie des dents, de telle façon que l'on puisse placer l'enrouleur dans une position variable où l'axe du mandrin est incliné par rapport à l'horizontale à condition qu'un axe YY demeure horizontal. En faisant tourner la monture autour de l'axe YY, on fait en sorte que la pointe du cliquet conserve une distance appropriée par rapport à la denture.

Le réglage de la rotation de la monture par rapport à l'axe YY est possible du fait qu'une portée cylindrique de cette monture est reçue à frottement dur dans une ouverture circulaire d'une branche d'une console. La position angulaire de la monture est réglée, au montage du rétracteur, à l'aide d'un tournevis engagé dans une fente ménagée dans la face extérieure de la portée, de manière que le pendule soit à la verticale lorsque le rétracteur est monté en position dans le véhicule au repos.

Par ailleurs, FR-A-2 405 717 décrit un boîtier contenant une bille formant détecteur d'accélération ainsi qu'un organe de transmission formant levier oscillant de blocage d'un disque denté, ledit boîtier étant susceptible d'être positionné en rotation par rapport à une plaque et d'être bloqué en position par des languettes repliées dans des rainures.

Les exigences de la construction automobile en particulier font souhaiter la réalisation de détecteurs d'accélération particuliers adaptés à des véhicules dans lesquels les enrouleurs doivent être montés avec des angles d'inclinaison différents. Tel est souvent le cas, notamment pour les enrouleurs de sièges avant et arrière d'un même véhicule.

Les supports des pièces mobiles de ces enrouleurs sont généralement réalisés en matière plastique moulée, de sorte qu'il est nécessaire de disposer d'autant de moules qu'il y a d'angles d'inclinaison du corps de l'enrouleur ce qui accroît considérablement le coût de fabrication de telles pièces.

Par ailleurs, au montage, il y a des risques d'erreurs.

L'invention vise à remédier aux inconvénients précités, en créant un enrouleur pour ceinture de sécurité dont le détecteur d'accélération comporte un support pour la masse mobile qui permette de placer ladite masse en position de repos horizontale, quelle que soit l'inclinaison donnée à ce support par l'ensemble du corps de l'enrouleur et d'adapter de nouveaux moyens de réglage de position plus fiables, plus compacts et plus aisés à mettre en oeuvre en utilisant deux boîtiers assemblés l'un dans l'autre, le concept de "boîtier" impliquant qu'il s'agit d'un organe formant enveloppe et destiné à porter un mécanisme, à la manière d'un boîtier de montre.

La structure du second boîtier est adaptée d'une part à un détecteur d'accélération à bille connu en soi et qui comporte, d'autre part, un réglage d'inclinaison pratiquement indéréglable et indémontable du fait du clipsage par des languettes et des ergots qui s'opposent à la rotation d'une saillie dans son orifice de réception.

Selon l'invention, le second boîtier présente une cuvette conique de réception d'une bille formant la masse d'inertie, tandis que le levier oscillant présente lui aussi un évidement conique qui coiffe la bille et le second boîtier comporte un ergot destiné à être engagé dans l'un d'une série de trous entourant l'orifice, de manière à permettre de disposer d'un détecteur d'accélération standard mais préréglé à l'assemblage de façon indéréglable dans le premier boîtier pour occuper une position angulaire déterminée correspondant au type de véhicule auquel il est destiné.

Suivant un mode de réalisation particulière de l'invention, le premier boîtier est réalisé en matière plastique et porte sur l'une de ses faces des pions de fixation de ce boîtier contre la face du support pour indiquer l'angle d'inclinaison d'un détecteur d'accélération donné, la matière plastique de son premier boîtier présente une couleur spécifique permettant de repérer de l'extérieur de l'enrouleur au moins la couleur des pions de fixation. De préférence, au moins l'un des pions de fixation présente une caractéristique de forme permettant de repérer le sens de l'inclinaison de l'enrouleur.

Les angles au sommet des cuvettes de réception de la bille déterminent la sensibilité du détecteur et le sommet de la cuvette du levier peut être décalé vers l'extrémité libre du levier par rapport à la verticale passant par le sommet de la cuvette du second boîtier d'un angle rendant la sensibilité du détecteur pratiquement indépendante de la direction de l'accélération.

D'autres caractéristiques de l'invention apparaîtront au cours de la description qui va suivre, donnée uniquement à titre d'exemple et faite en référence aux dessins annexés, sur lesquels:

- la figure 1 est une vue en perspective éclatée de l'enrouleur pour ceinture de sécurité suivant l'invention;
- la figure 2 est une vue en coupe et en élévation du détecteur d'accélération de l'enrouleur selon l'invention;
- la figure 3 est une vue en coupe partielle du détecteur de la figure 2 qui montre les moyens de rattrapage d'assiette du détecteur lorsque l'enrouleur est monté en position inclinée;
- la figure 4 est une vue partielle en coupe du dispositif de verrouillage de l'enrouleur suivant l'invention;
- la figure 5 est une coupe suivant la ligne 5-5 de la figure 4, montrant le dispositif de verrouillage en position de repos;
- la figure 5a est une vue en coupe d'un détail de la figure 5 entouré par un cercle en trait mixte, montrant une variante de réalisation;
- la figure 6 est une vue analogue à celle de la figure 5 montrant le dispositif de verrouillage en position active;
- la figure 7 est une coupe du mandrin d'enroulement de la sangle montrant l'assemblage des divers éléments du mandrin entre-eux;
- la figure 8 est une vue partielle en coupe qui montre le maintien de l'entretoise du support de l'enrouleur par les capots d'extrémité de l'enrouleur;
- les figures 9 et 10 sont des vues partielles en coupe montrant les moyens d'immobilisation des capots d'extrémité de l'enrouleur sur le support métallique, respectivement en position prête à l'assemblage et en position assemblée.

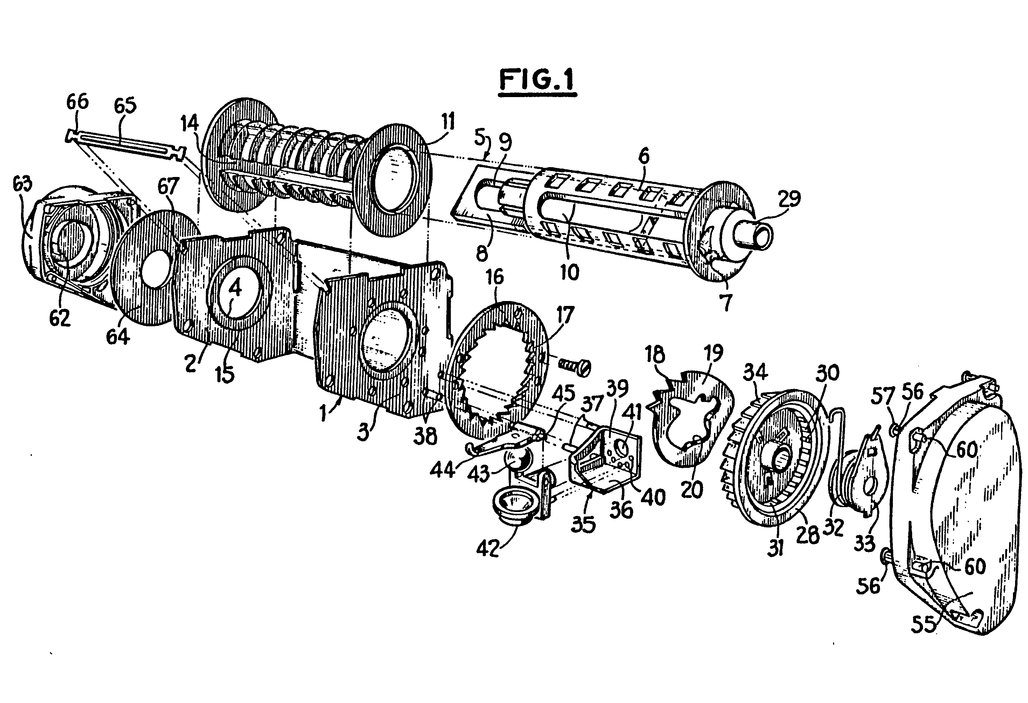

L'enrouleur représenté à la figure 1 comporte un support 1 métallique en forme de chape qui comporte dans ses deux ailes latérales 2 et 3 des orifices circulaires 4 coaxiaux destinés à recevoir à rotation les extrémités de l'axe d'un mandrin désigné par la référence générale 5 sur lequel s'enroule la sangle de l'enrouleur (non représentée).

Le mandrin 5 comporte principalement un axe 6 en forme de fourreau, réalisé en matière plastique moulée et présentant un logement axial 7 dans lequel est emmanché un barreau métallique plat de renforcement 8 qui est représenté sur la figure 1 dans une position partiellement engagée dans ledit fourreau. Le barreau 8 présente une lumière axiale 9 qui, en position montée du barreau, coïncide avec une lumière correspondante 10 ménagée dans le fourreau 6 de façon à laisser passer l'extrémité de fixation de la sangle.

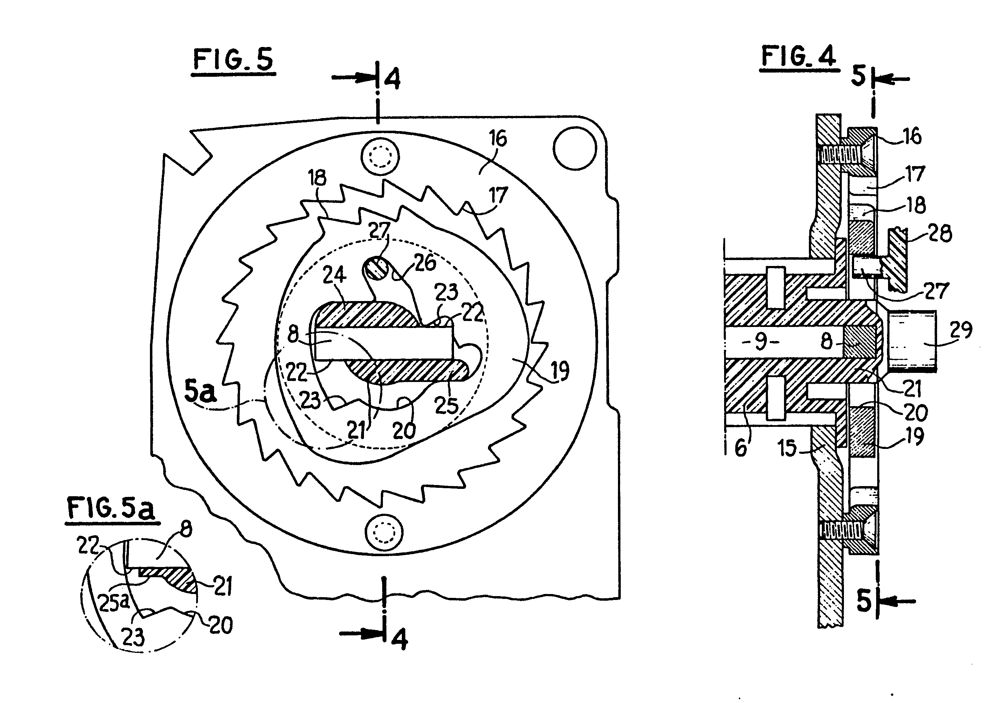

L'une des extrémités de l'axe 6 comporte des moyens qui font partie du dispositif de verrouillage de l'enrouleur et qui seront décrits plus en détail en référence à la figure 4.

Sur le fourreau 6 est montée une bobine 11, par exemple une bobine du type décrit au brevet français n° 2 452 941 appartenant à la Société AMCA, dont le corps annulaire est réalisé de façon à subir un écrasement radial sous l'effet de la traction élevée à laquelle la sangle de l'enrouleur est soumise en cas de chocs, ce qui ramène le diamètre minimal d'enroulement à une valeur voisine de celle de l'axe de l'enrouleur.

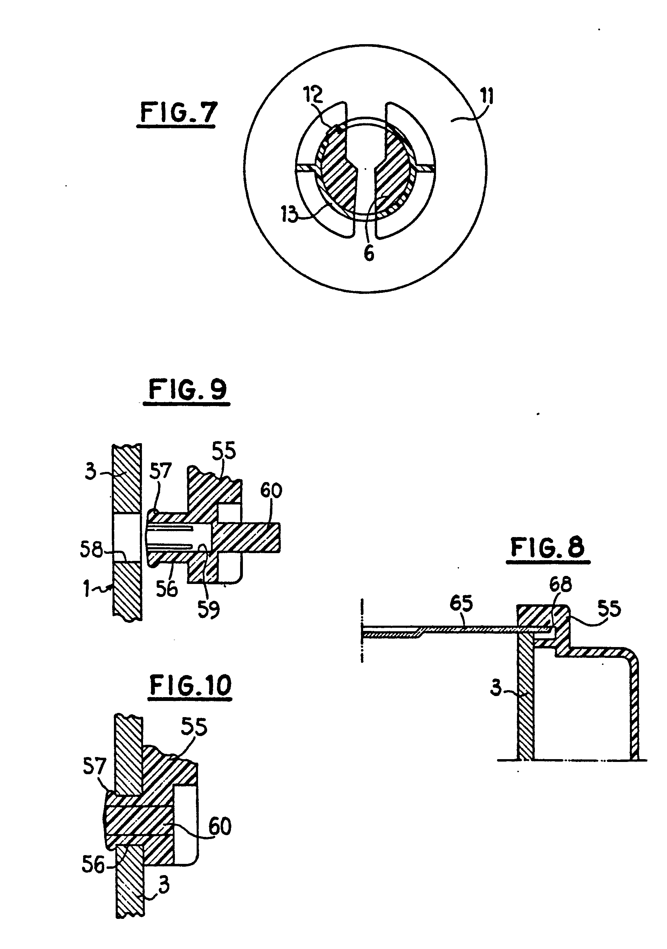

Comme le montre la figure 7, la bobine 11 est calée en rotation sur le fourreau 6 au moyen d'un ergot 12 porté par celui-ci, qui pénètre dans un orifice correspondant ménagé dans le corps annulaire 13 de ladite bobine.

Bien entendu, la bobine 11 présente elle aussi dans sa surface latérale, des passages axiaux 14 pour la sangle.

Le positionnement axial du mandrin 5 dans le support 1 est assuré par la coopération des surfaces d'extrémité dudit mandrin avec des saillies annulaires 15 entourant les orifices 4 ménagés dans les ailes 2 et 3 du support et obtenus par emboutissage de la matière de celui-ci.

A l'extérieur de l'aile 3 du support 1 est fixée une roue à rochet 16 coaxiale à l'orifice 4 pour le passage de l'axe 6 du mandrin. Cette roue à rochets présente une denture interne 17 destinée à coopérer avec la denture externe correspondante 18 d'une came 19 dont le profil de came 20 est constitué par un découpage sinueux et fermé qui sera mieux décrit en référence aux figures 4 à 6.

Comme le montre la figure 4, la came 19 est montée à l'intérieur de la roue à rochet 16 et de façon à entourer l'extrémité de l'axe 6 du mandrin 5 et du barreau 8.

La roue à rochet 16 et la came 19 sont réalisées par découpage dans une tôle. Le sens de la découpe de ces deux pièces est inversé de façon qu'au montage le plat de découpage de l'une des pièces se trouve en regard de l'arrondi de l'autre.

La Demanderesse a remarqué que cet agencement est particulièrement favorable pour les dentures 17 et 18 de la roue à rochet 16 et de la came 19. En effet, lorsque la denture 18 de la came vient en prise avec celle de la roue à rochets, les dents des deux pièces ont tendance à subir sous l'action de l'effort radial, un déplacement axial relatif. En raison de l'agencement précité, les surfaces de contact des deux dentures en présence, ont alors tendance à augmenter légèrement, ce qui réduit la pression exercée sur les dentures.

A son extrémité tournée vers la roue à rochets 16, l'axe 6 présente un tourillon 21 dont le diamètre est inférieur à la largeur du barreau 8. Le barreau 8 fait saillie hors de la surface latérale du tourillon et présente deux parties à nu 22 destinées à coopérer avec des tronçons rectilignes diamétralement opposés 23 du profil de came 20 en vue de transmettre l'effort exercé par la sangle de la ceinture, de la denture 18 à la denture 17 de la roue à rochets 16.

On voit sur la Fig.6, la coopération des portions 22 du barreau 8 avec les tronçons de profil rectilignes 23 correspondants. Le contact métal contre métal ainsi obtenu, permet à l'ensemble de transmettre les efforts importants qui se produisent lors d'un choc entraînant l'intervention de la ceinture de sécurité.

Les faces du barreau 6 opposées aux portions à nu 22, sont pourvues chacune de bourrelets 24 et 25 venus de matière avec le fourreau 6 et qui sont destinées à venir au contact de portions correspondantes du profil de came 20 lorsque le dispositif de verrouillage est en position de repos. Grâce à cet agencement représenté en détail à la Fig.5, on réduit considérablement le bruit occasionné par les vibrations.

A titre de variante, comme représenté à la Fig. 5a, le bourrelet 25 comporte un prolongement 25a qui recouvre partiellement la région à nu 22 voisine. Ce prolongement joue le rôle d'élément anti-bruit lors du blocage de l'enrouleur en usage normal et d'élément de réaction dont l'écrasement sous l'action du barreau 6 dans des conditions de choc, accentue la venue en prise des dentures de la came et de la roue à rochet. Un prolongement analogue peut également être prévu pour l'autre bourrelet 24.

Il est également possible d'appliquer sur chaque région à nu, une pastille qui jouerait le même rôle que les prolongements précités.

Le profil de came 20 présente une excroissance 26 dans laquelle est engagé un ergot 27 d'entraînement de la came en rotation, ledit ergot étant porté par une roue dentée 28 en matière plastique montée à rotation sur les extrémités 29 du tourillon 21 prévu dans le prolongement du fourreau 6. La roue 28, généralement appelée roue d'inertie, est réalisée par injection et présente un grand nombre de trous 30 ménagés dans une paroi annulaire 31 et destinés à recevoir une extrémité en forme de crochet d'un ressort de sensibilité 32 monté sur un moyeu 33 destiné à être lui-même maintenu fixe en rotation. Le nombre de trous 30 prévu dans la roue 28 est par exemple de 17. Il permet de régler avec finesse la force de rappel exercée par le ressort 32 sur la roue 28. Le ressort 32 est avantageusement un ressort à fils et présente un diamètre très faible et une grande longueur, de sorte que sa courbe de réponse est très plate.

Les particularités du ressort 32 alliées aux nombreuses positions d'accrochage de son extrémité sur la roue d'inertie 28 assurent une très grande précision de réglage ainsi qu'une plage d'utilisation très large. Les variations de la force de rappel de ce ressort, d'une position de fixation de son extrémité en forme de crochet à la suivante, sont extrêmement faibles, ce qui présente un avantage important pour l'utilisateur.

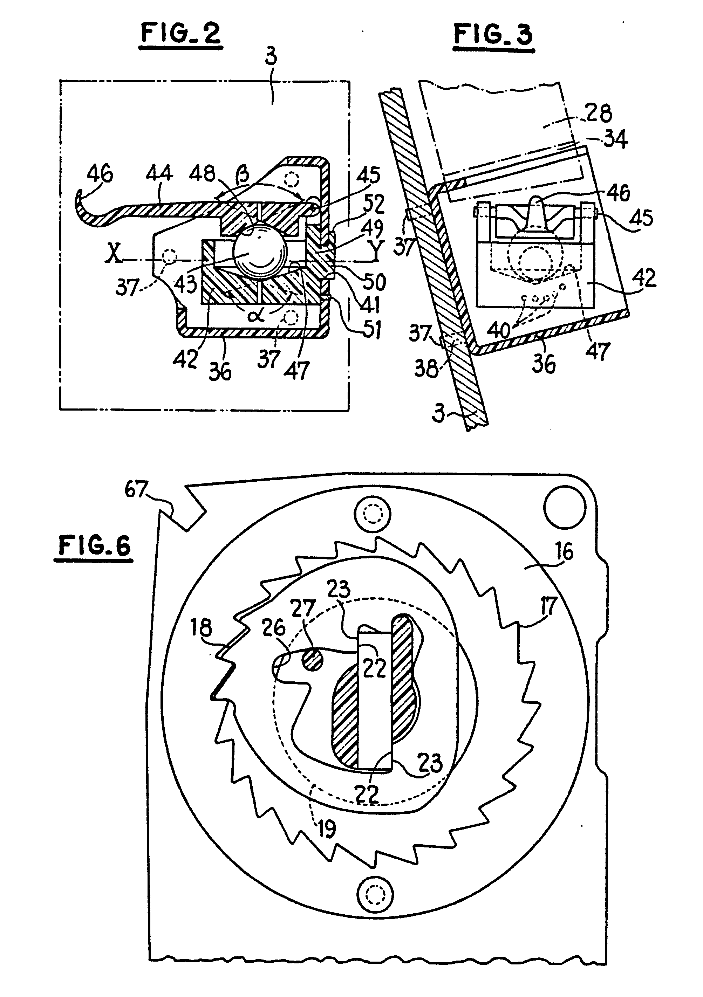

La roue d'inertie 28 présente une denture externe 34 qui coopère avec un détecteur d'accélération désigné par la référence générale 35 et qui va maintenant être décrit en se référant en particulier aux Fig. 2 et 3.

Ce détecteur comporte principalement un premier boîtier 36 en matière plastique qui porte sur une de ses faces des pions 37 de fixation du boîtier contre l'aile 3 du support 1 par introduction desdits pions dans des trous correspondants 38 ménagés dans le support.

Dans une face latérale 39 perpendiculaire à sa face de fixation au support 1, le boîtier présente une série de trous 40 de positionnement espacés entre eux à des intervalles angulaires déterminés et placés sur une circonférence qui entoure un trou de plus grand diamètre 41. Dans le boîtier 36 est monté un second boîtier 42 formant berceau pour une masse d'inertie 43 constituée dans le présent exemple par une bille destinée à actionner un levier 44 articulé lui aussi sur le second boîtier 42 par un axe 45 et dont l'extrémité libre coopère avec la denture externe 34 de la roue d'inertie 28.

Ainsi qu'on le voit notamment à la Fig. 2, le second boîtier 42 présente une cuvette 47 conique de réception de la bille 43, tandis que le levier 44 présente lui aussi un évidement conique 48 qui coiffe la bille 43. Le second boîtier 42 comporte en outre une portion 49 perpendiculaire au berceau qui porte une saillie 50 engagée dans l'orifice 41 du premier boîtier 36 ainsi qu'un ergot 51 destiné à être engagé dans l'un des trous 40 entourant le trou central 41 de manière à placer le second boîtier en position horizontale, compte tenu de l'inclinaison qui doit être donnée au support 1 de l'enrouleur.

A son extrémité, la saillie 50 présente des épanouissements 52 en forme de languettes de plus grande dimension que le diamètre de l'orifice 41 de manière à permettre l'immobilisation du second boîtier 42 par clipsage dans cet orifice.

Sur la Fig. 3, on a représenté une certaine inclinaison du support de l'enrouleur, matérialisée par l'inclinaison de l'aile 3 de celui-ci à laquelle est fixé le premier boîtier 36 du détecteur d'accélération. Le second boîtier 42 est fixé dans le premier en choisissant pour son ergot 51 un trou 40 dont l'écartement angulaire par rapport à la verticale estpropre à ramener la cuvette 47 du boîtier à l'horizontale.

Dans le mode de réalisation représenté aux figures 1 à 3, le premier boîtier 36 est pourvu d'une série d'orifices 40 permettant le rattrapage de l'assiette du second boîtier 42 en fonction de plusieurs inclinaisons du boîtier. Toutefois, lorsqu'il s'agit de fabriquer en grande série des enrouleurs destinés à un type de véhicule particulier dont on connaît à l'avance l'inclinaison que devra présenter le boîtier de l'enrouleur lors de sa mise en place, il suffit, lors du moulage du premier boîtier 36 de ne prévoir dans la paroi 39 de celui-ci que le seul trou 40 correspondant au rattrapage d'assiette envisagé.

Une telle fabrication se fait très simplement en prévoyant dans le moule de réalisation du premier boîtier 36, un certain nombre d'inserts munis chacun d'une broche dont la position correspond à l'inclinaison voulue pour la formation du trou correspondant dans le boîtier 36.

Le moule est ainsi rendu utilisable pour la fabrication de boîtiers destinés à des enrouleurs présentant des inclinaisons différentes.

Le fonctionnement du détecteur d'accélération qui vient d'être décrit est le suivant. Lors d'une accélération, la bille 43 est déplacée dans la cuvette conique 47 du boîtier 42 et elle agit sur la cuvette conique du levier 44 ce qui l'oblige à se déplacer vers le haut par oscillation autour de l'axe 45. Le bec 46 du levier se trouve ainsi en position de blocage de la roue d'inertie 28 par venue en prise avec sa denture 34.

La réaction à une accélération donnée est déterminée par l'angle, de la cuvette conique 47.

La distance de montée du levier est déterminée par les angles respectifs α et β des deux cuvettes 47 et 48.

Le boîtier à billes qui vient d'être décrit est utilisable pour toutes les inclinaisons comprises entre 0° et 30° aussi bien vers la gauche que vers la droite.

L'inclinaison est déterminée par le premier boîtier 36. On voit grâce à l'agencement représenté à la Fig 2, que le second boîtier 42 peut occuper les diverses positions angulaires dans le premier boîtier 36 par rotation autour d'un axe horizontal XY constant quelle que soit l'inclinaison de l'enrouleur. Le jeu entre le bec 46 du levier 44 et la roue d'inertie 28 est donc constant.

Afin de déterminer l'angle d'inclinaison d'un détecteur d'accélération donné, celui-ci est identifiable de l'extérieur de l'enrouleur par une couleur différente du premier boîtier 36 et par conséquent des pions 37 de fixation du premier boîtier au support 1. Les boîtiers prévus pour être montés avec un angle d'inclinaison nul pourront être de couleur jaune, ceux destinés à être montés avec une inclinaison de 6° pourront être de couleur blanche, etc.

Le sens de l'inclinaison vers la gauche ou vers la droite peut être rendu reconnaissable en prévoyant pour l'un des trois pions de fixation 37 une forme différente de celle des deux autres. Par exemple, l'un des pions pourra être plat alors que les autres seront creux ou inversement.

Afin de rendre la réaction du détecteur d'accélération et sa sensibilité identiques dans les quatre directions, la cuvette 46 du levier 44 peut présenter une inclinaison par rapport à la cuvette 47 du second boîtier. Cette inclinaison est matérialisée par un décalage angulaire du sommet de la cuvette 48 du levier 44 par rapport à la verticale passant par le sommet de la cuvette 47 du second boîtier 42.

Le décalage angulaire est dirigé vers le bec 46 du levier 44.

L'ensemble comprenant la roue à rochets 16, la came 19, la roue d'inertie 26 et le détecteur d'accélération 35 est enfermé par un capot 55 en matière plastique qui est fixé à l'aile 3 du support 1 de la manière représentée aux figures 9 et 10. Le capot 55 présente sur sa face destinée à être appliquée contre le support 1, des pions fendus 56 pourvus de saillies d'extrémité radiales 57 et destinés à être engagés par clipsage dans des trous correspondants 58 ménagés dans l'aile 3 du support 1. Les pions 57 sont creux et le capot présente venue de matière en regard de l'évidement 59 de chaque pion, une cheville cassable 60 qui, comme le montre la figure 10 est enfoncée dans l'évidement 59 du pion correspondant après introduction de celui-ci dans son orifice 58. On obtient ainsi un verrouillage du capot qui rend son retrait pratiquement impossible sans un outillage spécial.

L'enrouleur représenté à la figure 1 présente en outre un ressort 62 de rappel du mandrin 5 logé dans un second capot 63 destiné à être appliqué contre l'aile 2 du support 1 opposée au mécanisme de verrouillage, un flasque mince 64 étant interposé entre le ressort et la face externe de l'aile 2 du support et pincé sur sa périphérie par le capot 63. Le flasque 64 est réalisé en une pellicule de matière plastique de faible épaisseur et empêche le contact métal contre métal entre le support 1 et le ressort 62. Le capot 63 est fixé à l'aile 2 du support 1 de la même manière que le capot 55.

L'écartement entre les ailes 2 et 3 du support 1 de l'enrouleur est assuré à l'aide d'une entretoise métallique fine 65 qui présente à chacune de ses extrémités des zones échancrées 66 engagées dans des encoches 67 prévues dans les ailes 2 et 3. L'immobilisation de l'entretoise 65 est assurée par les capots 55 et 63 qui présentent à cet effet, comme le montre la figure 8, des logements 68 pour les extrémités de l'entretoise se trouvant au-delà des échancrures 66 et dépassant hors des limites du support 1.

Le fonctionnement de l'enrouleur qui vient d'être décrit résulte de sa construction même et il est remarquable essentiellement par le fait que le dispositif de verrouillage, grâce au profil particulier de la came 19 qui coopère avec le barreau central 8 du mandrin 5, fonctionne de manière à la fois efficace en raison du contact métal contre métal du barreau avec les régions 23 de la came de manière à transmettre l'effort important engendré par un choc et matière plastique contre métal lorsque le dispositif est au repos, ce qui supprime pratiquement tout bruit dû aux vibrations.

L'enrouleur qui vient d'être décrit est de conception simple dans la mesure où son mandrin est réalisé en matière plastique moulée renforcée par un simple barreau métallique dont l'extrémité fait office d'élément de transmission coopérant avec la came dont l'entraînement est commandé par le détecteur d'accélération. La came, en raison de son profil qui englobe le logement pour le maneton de la roue d'inertie 28 présente l'avantage de ne pouvoir être montée que dans un seul sens, ce qui évite les erreurs. Par ailleurs, elle est simple à découper.

La finesse du ressort de rappel 32 de la roue d'inertie 28 permet un réglage extrêmement précis de la force de rappel de celle-ci, ainsi qu'un ajustement fin de l'inertie de cette roue lorsqu'elle est sollicitée par une accélération de la sangle. Enfin, le verrouillage des capots de protection du mécanisme de l'enrouleur, rend celui-ci pratiquement inviolable à moins de disposer d'un outillage spécialisé.

Par conséquent, l'enrouleur suivant l'invention allie une relative simplicité de construction à une bonne sécurité de fonctionnement et à une souplesse accrue d'adaptation aux exigences des constructeurs de véhicules automobiles.

**Revendications**

1.- Enrouleur à blocage automatique pour au moins une ceinture de sécurité de véhicule comportant un mandrin (5) monté à rotation dans un support (1) et sur lequel est enroulée la sangle de la ceinture, l'axe du mandrin pouvant être horizontal ou incliné d'un certain angle, ledit mandrin étant sollicité par un ressort de torsion (62) dans le sens de l'enroulement, et un dispositif de verrouillage (16, 19, 28) qui, en cas de choc, bloque le mandrin (5) en rotation en empêchant le déroulement de la sangle, le dispositif de verrouillage comportant une roue d'inertie (28) rappelée par un organe élastique (32) et étant commandé par un détecteur d'accélération (35), comprenant une masse d'inertie (43) coopérant lors de la détection d'une accélération ou d'une décélération avec un levier oscillant (44) de blocage de la roue d'inertie (28) et susceptible d'être ramené sensiblement dans la même position quelle que soit l'inclinaison de l'axe du mandrin (5) de l'enrouleur à l'aide d'un premier boîtier (36) fixé par une de ses faces latérales contre une face (3) du support (1) de l'enrouleur et dont une autre face latérale (39) comporte un orifice (41) pour la fixation d'un second boîtier (42) qui porte la masse d'inertie (43) et qui présente une saillie (50) engagée dans l'orifice (41) du premier boîtier (36) et susceptible d'être immobilisée selon différentes positions angulaires dans ledit orifice (41) de façon à permettre le réglage du second boîtier dans une position horizontale quelle que soit l'inclinaison de l'axe du mandrin (5), caractérisé en ce que le second boîtier (42) présente une cuvette conique (47) de réception d'une bille (43) formant la masse d'inertie, tandis que le levier oscillant (44) présente lui aussi un évidement conique (48) qui coiffe la bille (43) et en ce que le second boîtier (42) comporte un ergot (51) destiné à être engagé dans l'un d'une série de trous (40) entourant l'orifice (41) de manière à permettre de disposer d'un détecteur d'accélération (35) standard mais préréglé à l'assemblage de façon indéréglable dans le premier boîtier (36) pour occuper une position angulaire déterminée correspondant au type de véhicule auquel il est destiné.

2.- Enrouleur selon la revendication 1, caractérisé en ce que le premier boîtier (36) est réalisé en matière plastique et porte sur l'une de ses faces des pions (37) de fixation de ce boîtier (36) contre la face (3) du support (1) et en ce que, pour indiquer l'angle d'inclinaison d'un détecteur d'accélération donné, la matière plastique de son premier boîtier (36) présente une couleur spécifique permettant de repérer de l'extérieur de l'enrouleur au moins la couleur des pions de fixation (37).

3.- Enrouleur selon la revendication 2, caractérisé en ce qu'au moins l'un des pions de fixation (37) présente une caractéristique de forme permettant de repérer le sens de l'inclinaison de l'enrouleur.

## Patentansprüche

1.- Selbstsperrender Aufwickler für wenigstens einen Fahrzeug-Sicherheitsgurt, mit einer drehbar in einem Halter (1) angeordneten Walze (5), auf welcher der Gurtriemen aufgewickelt wird und deren Achse horizontal oder um einen gewissen Winkel geneigt sein kann, wobei die Walze von einer Torsionsfeder im in Aufwickelsinn beaufschlagt wird, und mit einer unter der Einwirkung eines Stosses die Drehbewegung der Walze (5) und somit das Abwickeln Riemens verhindernden Verriegelungsvorrichtung (16, 19, 28), die ein von einem elastischen Organ (32) beaufschlagtes Trägheitsrad (28) umfasst und durch einen Beschleunigungsfühler (35) gesteuert wird, der eine Trägheitsmasse (43) aufweist, die bei Erfassen einer Beschleunigung oder Verlangsamung mit einem das Trägheitsrad (28) sperrenden Schwinghebel (44) zusammenwirkt, wobei diese Vorrichtung wesentlich in die gleiche Lage zurückbringbar ist, unabhängig von der Neigung der Achse der Walze (5) des Aufwicklers, und zwar vermittels eines ersten Gehäuses (36), das mit einer seiner Seitenflächen an einer Fläche (3) des Halters (1) befestigt ist, während eine andere seiner Seitenflächen (39) eine Öffnung (41) zur Befestigung eines zweiten Gehäuses (42) aufweist, welches die Trägheitsmasse (43) trägt und einen in die Öffnung (41) des ersten Gehäuses (36) eingreifenden Vorsprung (50) besitzt, der in dieser Öffnung (41) in verschiedenen Winkellagen festlegbar ist, um das Ausrichten des zweiten Gehäuses in einer horizontalen Lage zu gestatten, unabhängig von der Neigung der Achse der Walze (5), dadurch gekennzeichnet, dass das zweite Gehäuse (42) eine konische Pfanne (47) bildet, die eine die Trägheitsmasse bildende Kugel (43) aufnimmt, wobei der Schwinghebel (44) ebenfalls eine konische Ausnehmung (48) besitzt, die die Kugel (43) abdeckt, und dass das zweite Gehäuse (42) einen in unter einer Mehrzahl von die Öffnung (41) umgebenden Löchern (40) gewähltes Loch einsetzbaren Stift (51) aufweist, um es zu gestatten, über einen serienmässigen, aber beim Zusammenbau unverstellbar vorregulierten Beschleunigungsfühler (35) im ersten Gehäuse (36) zu verfügen, derart, dass er eine bestimmte Winkellage einnimmt, die dem Fahrzeugtyp entspricht, für den er vorgesehen ist.

2.- Aufwickler nach Anspruch 1, dadurch gekennzeichnet, dass das erste Gehäuse (36) aus Kunststoff gefertigt ist und an einer seiner Flächen Zapfen (37) zur Befestigung dieses Gehäuses (36) an der Fläche (3) des Halters (1) aufweist, und dass der Kunststoff seines ersten Gehäuses (36) zwecks Anzeige des Neigungswinkels eines gegebenen Beschleunigungsfühlers eine spezifische Farbe besitzt, die es gestattet, von der Aussenseite des Aufwicklers her wenigstens die Farbe der Befestigungszapfen (37) zu erkennen.

3.- Aufwickler nach Anspruch 2, dadurch gekennzeichnet, dass wenigstens einer der Befestigungszapfen (37) eine Formcharakteristik besitzt, die es gestattet, die Neigungsrichtung des Aufwicklers zu bestimmen.

## Claims

1.- Self-locking winding retractor for at least one vehicle safety belt, comprising a mandrel (5) rotatively mounted in a support (1) and adapted to wind up the girdle of the safety belt, the axis of the mandrel being horizontal or inclined at a certain angle, said mandrel being biased by a torsion spring (62) in the winding direction, and a locking device (16, 19, 28) which under the effect of a shock blocks the mandrel (5) against rotation while preventing the girdle from unwinding, said locking device comprising an inertia wheel (28) biased by an elastic element (32) and being controlled by an acceleration detector (35) including an inertia mass (43) cooperating under acceleration or deceleration detection conditions with an oscillating lever (44) adapted to block the inertia wheel (28), said device being adapted to be returned substantially into the same position whichever the inclination of the axis of the mandrel (5) of the retractor may be, by means of a first housing (36) affixed by one its lateral faces onto one face (3) of said support (1) of the retractor, and another lateral face (39) of which has an orifice (41) for fixing a second housing (42) which carries the inertia mass (43) and which comprises a protrusion (50) engaged in the orifice (43) of the first housing (36) and adapted to be immobilized in accordance with various angular positions in said orifice (41) so as to allow adjustment of the second housing in a horizontal position independently of the inclination of the axis of the mandrel (5), characterized in that the second housing (42) forms a conical recess (47) for receiving a ball (43) constituting said inertia mass, while said oscillating lever (44) has also a conical recess (48) covering the ball (43), and in that the second housing (42) comprises a stud (51) adapted to engage one of a series of holes (40) surrounding said orifice (41) so as to allow to have an standard acceleration detector (35) preadjusted in a non modifiable manner during assembly in the first housing (36) for occupying a determined angular position corresponding to the type of vehicle in which it is intended to be used.

2.- Winding retractor according to claim 1, characterized in that the first housing (36) is made of plastic material and carries on one of its faces fingers (37) for fixing this housing (36) onto the face (3) of the support (1), and in that for indicating the angle of inclination of a given acceleration detector the plastic material of its first housing (36) has a specific colour allowing to determine from the outside of the retractor at least the colour of said fixing fingers (37).

3.- Winding retractor according to claim 2,

characterized in that at least one of said fixing fingers (37) has a characteristic shape feature allowing the direction of the inclination of the winding retractor to be determined.

# FIG.1

0078204

0 078 204

FIG. 2    FIG. 3

FIG. 6

FIG.5

FIG.4

FIG.5a

0 078 204

FIG. 7

FIG. 9

FIG. 8

FIG. 10